# EUROPEAN PATENT APPLICATION

(11) **EP 0 969 188 A2**
(43) Date of publication of application: **05.01.2000**
(21) Application number: 99108459.1
(22) Date of filing: 30.04.1999
(51) Int. Cl.: F01N 7/18, F02M 35/10, B60K 13/04

(54) **Fixing device for at least one exhaust or intake manifold of an internal combustion engine**

(30) Priority: 29.06.1998 IT MI981490
(71) Applicant: CRC Centro Ricerche Cagiva S.A., 47031 Borgo Maggiore (SM)
(72) Inventor: Tamburini, Massimo, 47895 Domagnano, (SM)
(74) Representative: Ripamonti, Enrico, Dr. Ing.

(57) **Abstract**

A device (1) for fixing at least one exhaust or intake manifold (4, 5) to an internal combustion engine (3), said manifold (4, 5) being removably associated with the thermal part (2) of the engine (3) so as to cooperate functionally with one or more cylinders of said engine (3); the device (1) comprises a member (13) removably secured to the engine (3) in a position eccentric to the manifold (4, 5) and having fixing means (22) for this latter which embrace at least part of it to maintain it in contact with the engine (3) on securing said member to this latter.

## Description

This invention relates to a fixing device for at least one manifold removably mounted on the thermal part of an internal combustion engine and operationally connected to one or more cylinders (the term "manifold" meaning each of the pipes leaving or entering the cylinder head), in accordance with the introduction to the main claim.

Various devices are known for performing the aforesaid function. Numerous solutions have been used up to the present time, but can be summarized into three categories:
a) Threaded studs projecting from the cylinder head to fix the manifold to the head by fixing members such as flanges rigid with the manifold or removable rings. The studs, usually two or more for each manifold, are uniformly distributed on a circumference close to the seat of the element to be clamped. This solution has the drawback that the arrangement of said fixing members does not enable the manifold to be clamped uniformly and obliges the operator to act alternately on the various threaded elements, consequently without guaranteeing constant pressure on the sealing elements (gaskets) present in the seat provided in the cylinder head to receive the manifold, with consequent loss of sealing efficiency and the triggering of mechanical stresses harmful to the integrity of the members concerned.
b) Threaded rings which axially clamp the manifold by engaging a relative thread on the cylinder head. This system hence requires a number of fixing elements equal to the number of pipes. Said elements exert a virtually uniform pressure on said seal elements, but require costly machining of the cylinder head. In addition, mechanical stresses can be generated in the manifold (provided with a flange cooperating with the ring) if the manifold is not constructed with high precision (perpendicularity between flange and pipe). Of equal importance is the difficulty of mounting the manifold system, especially engaging the threaded ring, as is well known to operators in this sector. Finally, because of the vibration present during normal use, the system can undergo slackening, which can affect the sealing quality of the connection.
c) Elastic members (axial springs) positioned about the seat of the manifold to retain this latter in its seat by suitable preloading. These springs are often uncomfortable to apply, and have a marked tendency to deteriorate because of the severe operating conditions (heat, vibration, etc.) to which they are subjected, leading frequently to their breakage. Moreover two or more springs have to be provided for each manifold, and they do not ensure correct retention uniformity especially after having been removed a number of times. This is because the possible yielding of the elastic members can modify their mechanical characteristics unequally. Finally, this known fixing system does not necessarily operate perfectly if the installation undergoes even small dynamic stressing.

From this short panorama it will be apparent that the systems used up to the present time require a large number (equal to or usually greater than the number of manifolds associated with the engine) of parts for the fixing, and involve a general complexity of installation. Moreover the considerable care required in constructing and machining the components (mutually cooperating surfaces accurately machined), this being a necessary condition in ensuring operability of the engine or rather of the manifold-engine connection, results in an increase in construction costs.

An object of the present invention is to provide a fixing system which represents an improvement over known systems.

A particular object of the invention is to provide a device of the said type which enables the problems connected with the use of similar known systems to be at least partly solved.

A further object is to provide a device which is cost-competitive with known devices and functional by virtue of a smaller number of components, combined with constructional simplicity and extreme ease of assembly and removal.

These and further objects which will be apparent to the expert of the art are attained by a device in accordance with the accompanying claims.

The invention will be more apparent from the accompanying drawing, which is provided by way of non-limiting example, and on which:
Figure 1 is an isometric view of a device according to the invention;
Figure 2 is a perspective view of a multi-cylinder engine with the device of Figure 1 applied to its manifolds;
Figure 3 is a front view of the device of Figure 2;
Figure 4 is a section on the line 4-4 of Figure 3; and
Figure 5 is a view similar to Figure 3, showing a variant of the invention.

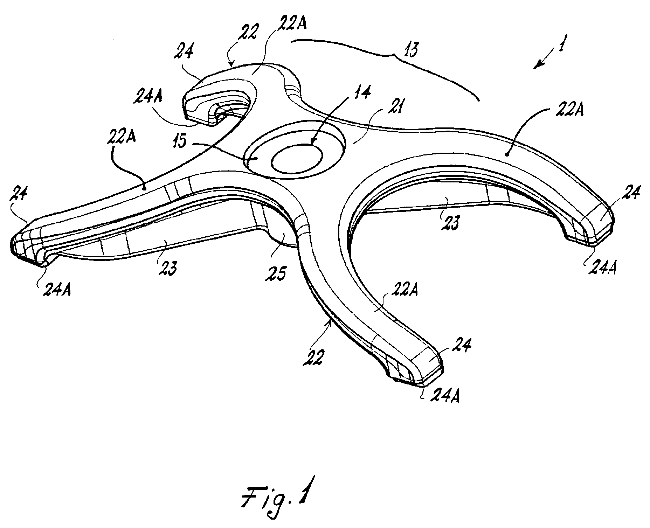

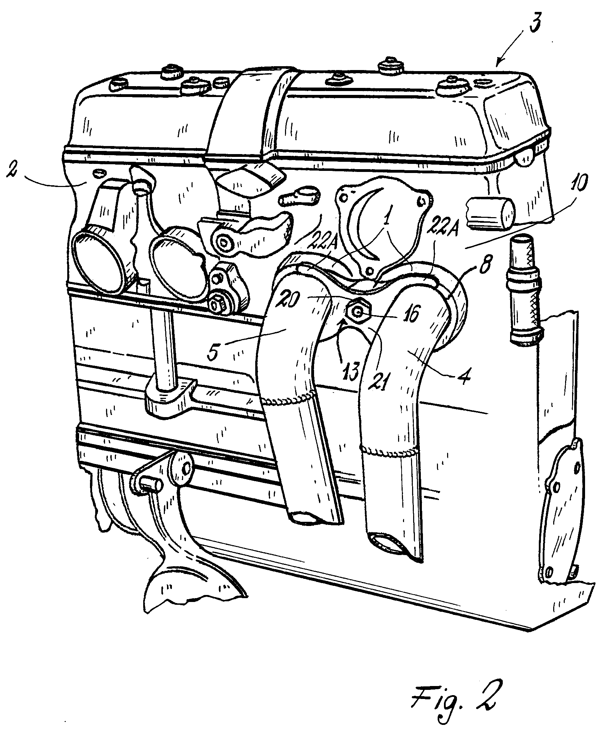

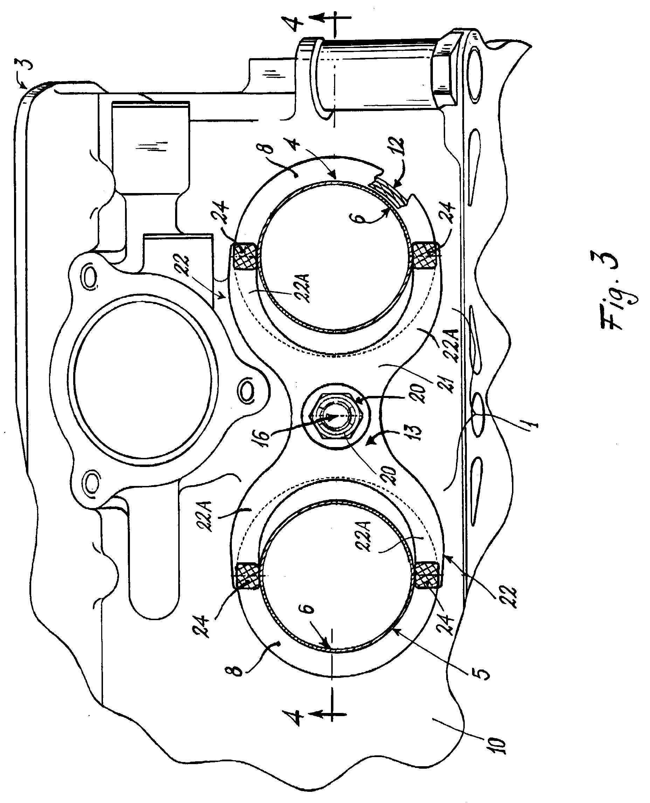

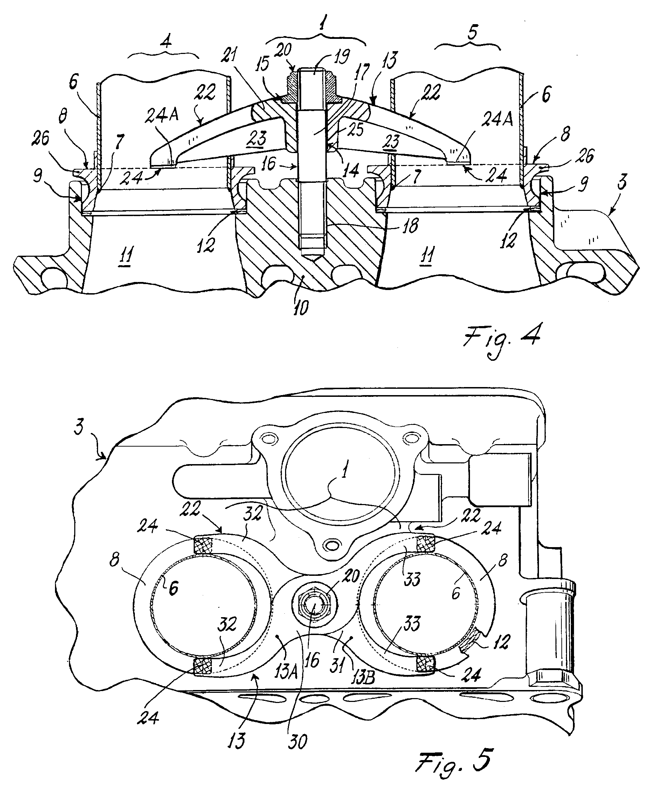

With reference to Figures 1 to 4, a device of the invention is indicated overall by 1 and is applied to the thermal part of an internal combustion engine 3, of multi-cylinder type in the example, for the purpose of connecting manifolds 4 and 5, for example exhaust manifolds, to it. These latter consist of a pipe 6 welded at one end 7 to a ring 8 which can be freely inserted into a suitable corresponding seat 9 provided in a cylinder head 10 into which the usual exhaust ducts 11 provided in the engine open. In this context the term "ring"' means any element provided, externally to the seat 12, with a portion 26 projecting from and perpendicular to the surface of the pipe 6. This portion can be discrete or continuous, for example annular (as in the figures). Between the ring 8 and the corresponding seat 9 there is interposed a gasket or seal element 12.

The device 1 comprises a member 12 having a through hole 14 (with corresponding spot-facing 15) enabling the member to be mounted on a fixing element 16 secured to the head 10 of the engine 3. This fixing element can be a stud 17 inserted into a threaded seat 18 in the head 10 and having a threaded free end 19 for insertion into the hole 14 to cooperate with a nut 20 for removably securing the member 13 to the head 10. The element 16 can also be a simple screw inserted into a seat in the engine or other equivalent element.

The fixing element 16 is eccentric to the seats 9 for the manifolds 4 and 5 and in the example is interposed between them.

In the example the member 13 is of so-called "double fork" shape. It comprises a central part or flange 21 (in which the hole 14 is provided) from which there extend in opposing directions two substantially semi-annular portions 22, each arranged to partially embrace a corresponding manifold 4 or 5. The member 13 is hence of overall X-shape.

Each portion 22 comprises two arms 22A, which are at least partly arched and have a stiffening rib 23 facing the head 10. Each rib 23 extends from one end 24 of the corresponding arm 22A and terminates in a cylindrical portion 25 of the flange 21 facing the engine 3.

The end 24 of each arm 22A is bent towards the head 10 and has a foot 24A which in the example rests on the annular surface 26 of the ring 8 of the corresponding manifold 4 or 5 or on that portion projecting (for example radially) from and perpendicular to the pipe 6.

The invention is used as follows. After inserting each ring 8 of the manifolds 4 and 5 into the respective seat 9, the member 13 is mounted on the stud 17, on the end of which the nut 20 is then placed and tightened. This action causes the member 13 to undergo an axial thrust towards the engine, with consequent pressing of the arms 22A of said member on the rings 8. These latter are hence pressed against the gaskets 12 which thus exert a sealing action against the walls of the seats 9, so preventing gas leakage.

Consequently using the device 1, by means of a single member 13 provided with a retention element 22 arranged to embrace the corresponding manifold 4 or 5, and a single fixing element 17 eccentric to the manifold seat 9, the manifold can be secured to the engine 3 easily, reliably and quickly.

Moreover, in the example two manifolds can be secured to the engine using a single member 13. Consequently the invention enables this fixing to be achieved using a considerably smaller number of parts for making the engine/manifold connection, with a consequent reduction in the weight of the connection members, their mechanical complexity and the machining precision required. This results in a reduction in the time and/or cost of the operations involved in fixing each manifold to the engine.

It should also be noted that as the single fixing element 16 for the member 13 is centered between the pair of pipes, as is apparent from Figure 3, there is the advantage of uniform pressure distribution on the contact surfaces for their hermetic sealing on assembly, together with correct force distribution on the rings 8 during the tightening of the nut 20 on the stud 17, all contributing to increased life of the seal elements 12 and rapid, reliable and correct assembly.

A particular embodiment of the invention has been described. However variants to this embodiment can be provided. For example, the contact surface between the ring and the device 1 (via the feet 24A of the ends 24 of the member 13) can be considerably increased to increase the pressing action on the ring. This surface could be completely circular, in which case the member 13 would have completely annular portions 22, to assume the shape of a figure "eight". If the member 13 is of this shape, it must be mounted on the pipes 6 before securing their ends 7 to the rings 8. Alternatively, and in contrast to the aforesaid, the contact surface between the ring 8 and the device 1 could be reduced to the extent of becoming substantially a point. According to a further variant of the invention, the member 13 can also be of H-shape.

Figure 5 shows a further embodiment of the invention. In this figure, in which parts corresponding to those of the already described figures are indicated by the same reference numerals, the member 13 is not in one piece, as in the preceding figures (in which it is of one-piece construction by pressing, casting, precision casting or the like), but comprises two portions 13A and 13B having a central part (30 and 31 respectively) from which opposing arms 32 and 33 extend respectively. The parts 30 and 31 are provided with a through hole 14 enabling the portions 13A and 13B to be mounted on the fixing element 16 by superposing the parts 30 and 31. The nut 20 secures said portions together to form the member 13.

With this variant, contact is facilitated between the device 1 and the circumferential portions of the ring 8 of the manifolds 4, 5 in that as the member 13 is split in two, the problem of inserting the flange or central part 21 between the manifolds to be fixed does not arise.

In a further embodiment the device 1 is associated with a single manifold on a single-cylinder internal combustion engine. In this case, the body of the device 1 has only one portion 22 to embrace this manifold. The other portion can either be dispensed with or, to achieve uniform pressure on the gasket present in the seat of the single manifold, can be provided in any shape, even as a simple arm forming a sort of appendix to counterbalance the tightening operation.

## Claims

1. A device for fixing at least one exhaust or intake manifold (4, 5) to an internal combustion engine (3), said manifold (4, 5) being removably associated with the thermal part (2) of said engine (3) so as to cooperate functionally with a corresponding duct (11) provided in this latter, one end (7) of said manifold being inserted into the seat (9) provided in the engine (3) at one end of said duct, characterised by comprising a member (13) removably secured to the engine (3) in a position eccentric to said seat (9), said member (13) comprising pressing means (22) acting on counter-means (8) associated with said end (7) of the manifold, to press on said counter-means when the member (13) is secured to the engine, and hence maintain said end (7) within said seat (9).

2. A device as claimed in claim 1, characterised in that the counter-means are an element (8) fixed to the end (7) of the manifold (4, 5) and comprising at least one portion (26) which projects from and perpendicular to the manifold and on which the pressing means (22) act, said element being freely inserted into the seat (9) provided in the engine and resting on a seal element (12).

3. A device as claimed in claim 1, characterised in that its member (13) is secured to the engine (3) by a single fixing element (16).

4. A device as claimed in claim 3, characterised in that the fixing element (16) is a stud (17) secured to the engine (3) eccentric to the seat (9) for the manifold (4, 5).

5. A device as claimed in claim 1, characterised in that the fixing element (16) cooperates with that portion (21) of the member (13) of the device (1) from which the pressing means (22) cooperating with the annular surface (26) of the manifold end element (8) extend, said portion (21) comprising a seat (14) for said fixing element.

6. A device as claimed in claim 1, characterised in that the pressing means comprise an at least partly annular portion (22) to be positioned about the manifold (4, 5), said portion (22) having at least one (24A) of its parts facing the engine (3) and cooperating directly with the manifold end element (8).

7. A device as claimed in claim 6, characterised in that that part (24A) of the portion (22) of the pressing means cooperating with the manifold end element (8) has limited contact with said element (8), said part being preferably shaped as a spot.

8. A device as claimed in claim 1, characterised in that the member (13) comprises an element (22) for counter-balancing the force exerted by the pressing means (22) on the counter-means (8) associated with the manifold (4, 5).

9. A device as claimed in claim 8, characterised in that the counter-balancing element (22) is at least one projection extending away from that portion (21) of the member (13) cooperating with the fixing element (16), in the opposite direction to that of the pressing means (22).

10. A device as claimed in claim 9, characterised in that the counter-balancing element (22) has an at least partly annular shape and comprises two arms (22A) extending away from that portion (21) of the member (13) cooperating with the fixing element, said element being shaped specularly to the pressing means (22) and forming with these latter the substantially X-shaped member (13) of the device, said member (13) being able to cooperate with two side-by-side manifolds between which the fixing element (16) is present.

11. A device as claimed in claim 9, characterised in that of the counter-balancing element (22) and the pressing means (22), at least one is of closed ring shape.

12. A device as claimed in claim 8, characterised in that the counter-balancing element and the pressing means (22) define rectilinear elements (22A) positioned diametrically between two side-by-side manifolds (4, 5).

13. A device as claimed in claim 12, characterised in that the counter-balancing element and the pressing means (22) define an H-shaped member.

14. A device as claimed in claim 1, characterised in that the member (13) consists of one piece.

15. A device as claimed in claim 1, characterised in that the member (13) consists of two portions (13A, 13B)..
